# EUROPEAN PATENT APPLICATION

(11) **EP 4 607 763 A1**
(43) Date of publication of application: **27.08.2025**
(21) Application number: 23879676.7
(22) Date of filing: 11.10.2023
(51) Int. Cl.: H02K 1/276

(54) **ROTOR AND ROTATING ELECTRIC MACHINE**

(30) Priority: 21.10.2022 JP 2022168887
(71) Applicant: Kabushiki Kaisha Toshiba, Minato-ku Tokyo (JP)
(72) Inventor: NARITA, Masanobu, Kawasaki-shi, Kanagawa 212-8585 (JP); AOKI, Kazuo, Kawasaki-shi, Kanagawa 212-8585 (JP)
(74) Representative: AWA Sweden AB
(86) International application number: PCT/JP2023/036876
(87) International publication number: WO 2024/085033

(57) **Abstract**

A rotor according to an embodiment comprises: a rotor core axially extending; a permanent magnet housing hole formed axially along an outer circumferential surface of the rotor core in a cross section of the rotor core; a permanent magnet housed in the permanent magnet housing hole; a coolant flow path formed along the permanent magnet housing hole inward of the permanent magnet housing hole in the cross section in a radial direction of the rotor core wherein the coolant flow path communicates with the permanent magnet housing hole to seal a coolant; and a sheet disposed inside the permanent magnet housing hole between an inner wall surface of the permanent magnet housing hole and a surface of the permanent magnet wherein the sheet closely adheres the permanent magnet to the inner wall surface.

## Description

### [Technical Field]

Embodiments of the invention relate to a rotor and a rotating electric machine.

### [Background Art]

In a rotating electric machine in which permanent magnets are arranged inside a rotor, the magnets inside the rotor generate heat when the rotating electric machine operates, which results in losses. In other words, it is known that the heat generation of the magnets causes a reduction of the power efficiency.

To realize a rotating electric machine having high power efficiency, it is important to efficiently cool the magnets of the rotor.

### [Prior Art Documents]

### [Patent Literature]

Patent Literature 1: JP-A 2021-100353 (Kokai)
Patent Literature 2: JP-A 2020-141552 (Kokai)
Patent Literature 3: JP-A 2018-67978 (Kokai)

### [Summary of Invention]

### [Problem to be Solved by the Invention]

Conventional rotors and rotating electric machines have the problem of reduced power efficiency due to heat generation of magnets located in the rotors. Embodiments of the invention are directed to solve such problems, and are directed to provide a rotor and a rotating electric machine that can suppress the reduction of the power efficiency by efficiently cooling the magnets of the rotor.

### [Means for Solving the Problem]

To achieve the object described above, a rotor according to an embodiment of the invention includes a rotor core extending in an axial direction, a permanent magnet housing hole formed in the axial direction along an outer circumferential surface of the rotor core in a perpendicular cross section of a rotation axis of the rotor core, a permanent magnet housed in the permanent magnet housing hole, a coolant flow path formed along the permanent magnet housing hole inward of the permanent magnet housing hole in the perpendicular cross section in a radial direction of the rotor core wherein the coolant flow path communicates with the permanent magnet housing hole and is configured to seal a coolant cooling the permanent magnet, and a sheet disposed inside the permanent magnet housing hole between an inner wall surface of the permanent magnet housing hole and a surface of the permanent magnet wherein the sheet closely adheres the permanent magnet to the inner wall surface.

### [Brief Description of Drawings]

[FIG. 1]

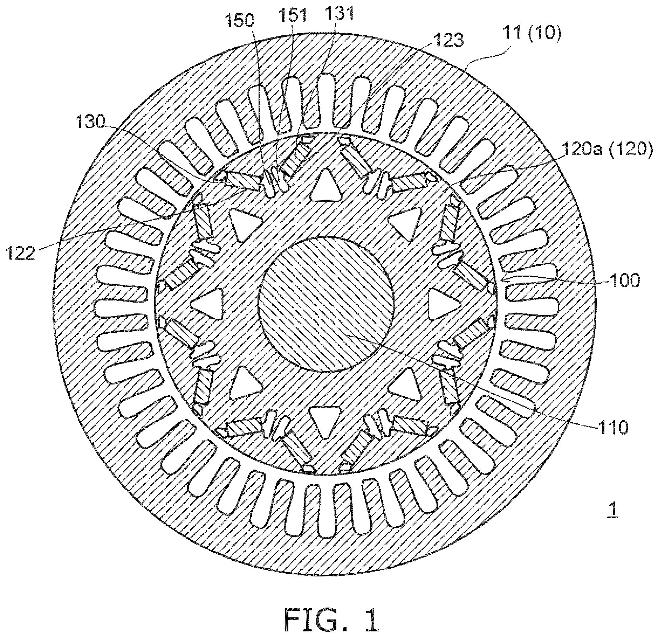

   FIG. 1 is a cross-sectional view showing a configuration of a rotating electric machine according to a first embodiment.
[FIG. 2]

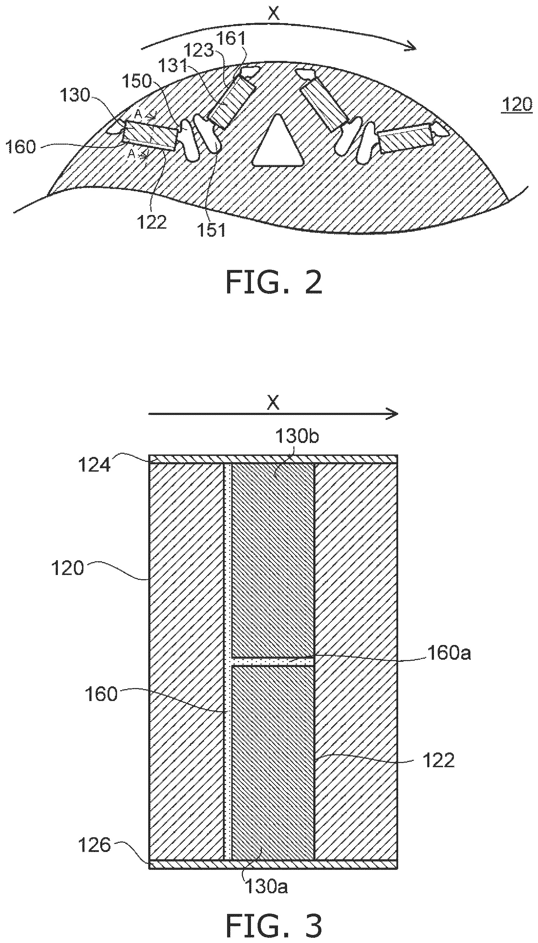

   FIG. 2 is a partially enlarged view of a cross section of a rotor according to the first embodiment.
[FIG. 3]
   FIG. 3 is a cross-sectional view showing a cross section (an A-A cross section) of the rotor according to the first embodiment.
[FIG. 4]

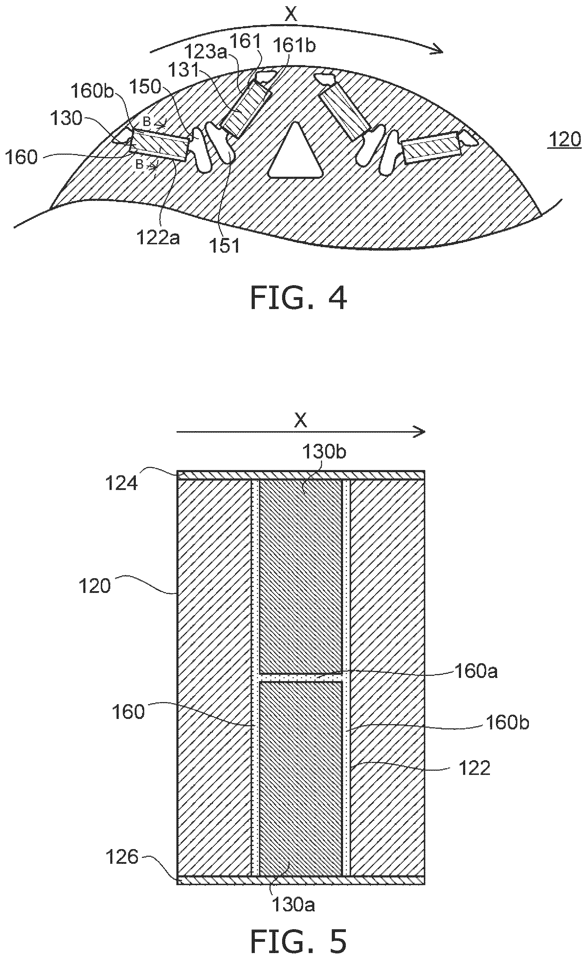

   FIG. 4 is a partially enlarged view of a cross section of a rotor according to a second embodiment.
[FIG. 5]
   FIG. 5 is a cross-sectional view showing a cross section (a B-B cross section) of the rotor according to the second embodiment.
[FIG. 6]

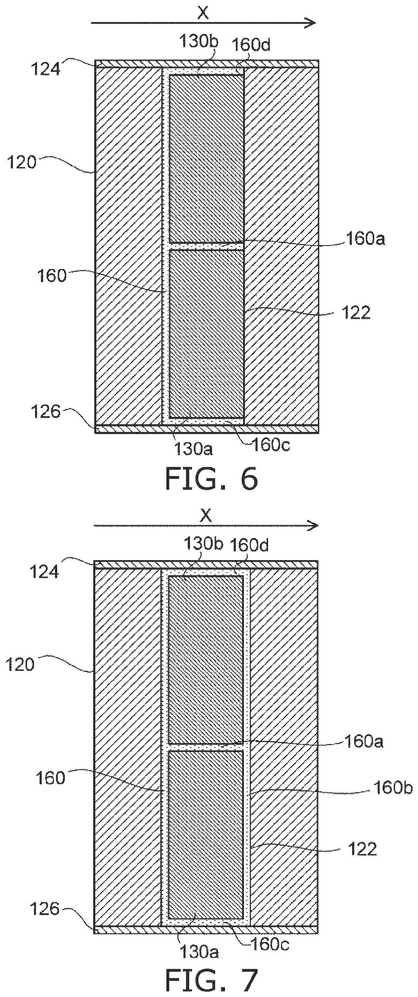

   FIG. 6 is a cross-sectional view showing a cross section (an A-A cross section) of a rotor according to a third embodiment.
[FIG. 7]
   FIG. 7 is a cross-sectional view showing a cross section (a B-B cross section) of a rotor according to a fourth embodiment.
[FIG. 8]

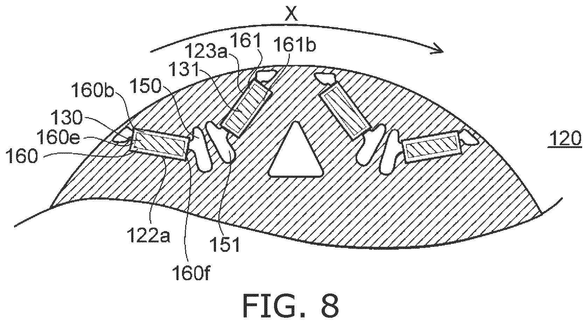

   FIG. 8 is a partially enlarged view of a cross section of a rotor according to a fifth embodiment.

### [Description of Embodiments]

A rotor and a rotating electric machine according to embodiments of the invention will now be described with reference to the drawings. Herein, the same or mutually similar parts are marks with common reference numerals; and a redundant description is omitted.

### (First embodiment)

FIG. 1 is a cross-sectional view showing a configuration of a rotating electric machine 1 according to an embodiment.

The rotating electric machine 1 includes an interior-magnet rotor 100, a cylindrical stator 10, and two bearings (not illustrated). The interior-magnet rotor 100 includes a rotor shaft 110 extending in the rotation-axis direction, a cylindrical rotor core 120 that similarly extends in the rotation-axis direction and is mounted to the radially outer side of the rotor shaft 110, and multiple permanent magnets 130 (131). The stator 10 is disposed to surround the rotor core 120 at the radially outer side of the rotor core 120 with a gap space interposed. The two bearings rotatably support the rotor shaft 110. FIG. 1 shows a cross section (hereinbelow, the "perpendicular cross section") that is perpendicular to the rotation axis of the rotor shaft 110.

The rotor core 120 is formed by stacking multiple electrical steel sheets 120a in the rotation-axis direction. End plates (not illustrated) are disposed at the two ends in the rotation-axis direction of the stacked electrical steel sheets 120a. Each electrical steel sheet 120a has a punched hole for the rotor shaft 110 to extend through, punched holes for the permanent magnets 130 (131) to extend through, etc. These punched holes form through-holes by stacking the electrical steel sheets 120a. Although FIG. 1 illustrates a case where the rotor core 120 is formed by stacking the electrical steel sheets 120a, the rotor core 120 is not limited thereto. A lumped rotor in which the rotor shaft and the rotor core are one piece also is applicable.

The rotor core 120 has multiple pairs of permanent magnet housing holes 122 and 123 extending in the axial direction along the circumferential direction of the rotor core 120. The permanent magnet housing holes 122 and 123 house the permanent magnets 130 and 131. The pair of permanent magnet housing holes 122 and 123 corresponds to a magnetic pole of the rotor 100. The permanent magnet housing holes 122 and 123 are formed along the rotation-axis direction of the rotor core 120. By stacking the multiple electrical steel sheets 120a, the punched holes that are formed in the multiple electrical steel sheets 120a form the permanent magnet housing hole 122 (123) extending in the rotation-axis direction of the rotor core 120.

The permanent magnets 130 and 131 correspond to a magnetic pole of the rotor 100 and are housed respectively in the permanent magnet housing holes 122 and 123. The pair of permanent magnets 130 and 131 that corresponds to each magnetic pole is arranged so that the spacing in the circumferential direction increases radially outward. In the example shown in FIG. 1, the permanent magnets 130 and 131 are disposed in an arrangement (also called a V-shaped arrangement) protruding inward in the radial direction of the rotor core 120. However, the permanent magnets 130 and 131 are not limited to this configuration. Other configurations may be used as long as the spacing in the circumferential direction of the permanent magnets 130 and 131 increases outward in the radial direction of the rotor 100. The permanent magnets 130 and 131 have flat plate shapes.

The permanent magnets 130 and 131 of a pair may be arranged as multiple sets having similar configurations along the circumferential surface of the rotor core 120. In the example shown in FIG. 1, a total of eight sets of the permanent magnets 130 and 131 are provided.

A coolant flow path 150 is formed proximate to the end portion of the permanent magnet housing hole 122, in which the permanent magnet 130 is housed, at the inner side in the radial direction of the rotor core 120. Similarly, a coolant flow path 151 is formed proximate to the end portion of the permanent magnet housing hole 123, in which the permanent magnet 131 is housed, at the inner side in the radial direction of the rotor core 120.

The coolant paths 150 and 151 are arranged in parallel with the permanent magnet housing holes 122 and 123. The coolant paths 150 and 151 define spaces configured to seal a coolant. The coolant flow paths 150 and 151 communicate with the permanent magnet housing holes 122 and 123. The coolant that passes through the coolant flow paths 150 and 151 can cool the permanent magnets 130 and 131.

FIG. 2 is an enlarged view of the pair of permanent magnets 130 and 131 arranged to protrude inward in the radial direction of the rotor core 120 shown in FIG. 1. As shown in FIG. 2, the permanent magnet housing hole 122 houses a sheet 160 and the permanent magnet 130.

The sheet 160 extends along one long side of the plate-shaped permanent magnet 130 in a cross section perpendicular to the rotation axis of the rotor core 120. In other words, the sheet 160 is disposed on one surface among the major surfaces of the plate-shaped permanent magnet 130. The permanent magnet 130 is formed in a plate shape; and a pair of long sides, which are major surfaces of the permanent magnet 130, are present in the cross section perpendicular to the rotation axis of the rotor core 120 as shown in FIG. 2. The sheet 160 extends along the long side (the major surface), among the two long sides, that is at the backside in a rotation direction X of the rotor 100.

Similarly, the permanent magnet housing hole 123 houses a sheet 161 and the permanent magnet 131. The sheet 161 extends along one long side of the plate-shaped permanent magnet 131 in the cross section perpendicular to the rotation axis of the rotor core 120. In other words, the sheet 161 is disposed on one surface among the major surfaces of the plate-shaped permanent magnet 131. The permanent magnet 131 is formed in a plate shape; and a pair of long sides is present in the cross section perpendicular to the rotation axis of the rotor core 120 as shown in FIG. 2. Among the two long sides, the sheet 161 extends along the long side (the major surface) that is at the backside in the rotation direction X of the rotor 100. This is similar for the other sets of permanent magnets as well.

FIG. 3 shows an A-A cross section of FIG. 2. Specifically, FIG. 3 shows a cross section of the plate-shaped permanent magnet 130 along the rotation axis of the rotor 100. As shown in FIG. 3, the cylindrical rotor core 120 is formed by stacking the multiple electrical steel sheets 120a; and end plates 124 and 126 are disposed at two ends of the rotor core 120. In the example shown in FIG. 3, the permanent magnet 130 includes multiple permanent magnets 130a and 130b in one permanent magnet housing hole 122. In other words, the permanent magnet 130 is housed in the permanent magnet housing hole 122 by being subdivided into multiple magnets.

As shown in FIG. 3, the sheet 160 is disposed at one long side (major surface) of the permanent magnet 130 (130a and 130b) in the cross section perpendicular to the rotation axis of the rotor 100. Also, a sheet 160a is disposed between the permanent magnets 130a and 130b. In other words, the sheet is disposed in the gap and at the major surface of the permanent magnet 130 (130a and 130b) at the back in the rotation direction of the rotor 100.

The sheets 160 and 160a act to fix the permanent magnet 130 (130a and 130b) at a prescribed position inside the permanent magnet housing holes 122 and 123. Accordingly, it is desirable for the sheets 160 and 160a to have the function of closely adhering the major surfaces of the permanent magnets 130 and 131 to the corresponding inner wall surfaces of the permanent magnet housing holes 122 and 123.

According to the embodiment, a coolant is sealed in the coolant flow paths 150 and 151 formed proximate to the end portions of the permanent magnets 130 and 131 at the radially inner side. The coolant flow paths 150 and 151 and the permanent magnet housing holes 122 and 123 communicate with each other, and so the coolant is filled around the permanent magnets 130 and 131. The permanent magnet 130 can be cooled thereby.

When the rotor core 120 is made of a stacked body of the electrical steel sheets 120a, there is a possibility that the coolant may leak out to the outer circumferential surface of the rotor core 120 between the permanent magnets 130 and 131 and the inner wall surfaces of the permanent magnet housing holes 122 and 123 due to the centrifugal force due to the rotation of the rotor 120. The sheets 160 and 160a according to the embodiment are disposed between the major surfaces of the permanent magnets 130 and 131 at the backside in the rotation direction of the rotor 100 and the corresponding inner wall surfaces of the permanent magnet housing holes 122 and 123, and so the coolant that is sealed in the coolant flow paths 150 and 151 can be prevented from leaking out from the outer circumferential surface of the rotor 100 due to the centrifugal force generated by the rotation of the rotor 100.

According to the embodiment, a reduction of the power efficiency of the rotating electric machine 1 caused by leakage of the coolant can be suppressed by including the sheet 160 around the permanent magnets 130 and 131, and particularly at the surfaces at the backside in the rotation direction of the rotor 100, where the coolant tends to leak.

In addition to being adhesive, the sheets 160 and 160a may be foamable. If the sheets 160 and 160a are foamable, the adhesion between the permanent magnets 130 and 131 and the wall surfaces of the permanent magnet housing holes 122 and 123 can be increased by expansion of the sheets 160 and 160a when the permanent magnets 130 and 131 generate heat due to the operation of the rotating electric machine 1; and the leakage of the coolant can be further suppressed.

### (Second embodiment)

A rotating electric machine according to a second embodiment will now be described with reference to FIGS. 4 and 5. The sheet arrangement in the rotating electric machine of the embodiment is different from that of the rotating electric machine of the first embodiment. In the following description, components common with the first embodiment are marked with common reference numerals; and a duplicate description is omitted.

FIG. 4 is an enlarged view of the pair of permanent magnets 130 and 131 arranged to protrude inward in the radial direction of the rotor core 120 according to the second embodiment. As shown in FIG. 4, a permanent magnet housing hole 122a houses a sheet 160b in addition to the sheet 160 and the permanent magnet 130.

The sheets 160 and 160b extend along two long sides of the plate-shaped permanent magnet 130 in the cross section. The permanent magnet 130 is formed in a plate shape; and a pair of long sides (major surfaces) is present in the cross section perpendicular to the rotation axis of the rotor core 120 as shown in FIG. 4. The sheets 160 and 160b extend along both of the two long sides (major surfaces).

Similarly, a permanent magnet housing hole 123a houses a sheet 161b in addition to the sheet 161 and the permanent magnet 131. The sheets 161 and 161b extend along both long sides (major surfaces) in the cross section of the plate-shaped permanent magnet 131. The permanent magnet 131 is formed in a plate shape; and a pair of long sides (major surfaces) is present in the cross section perpendicular to the rotation axis of the rotor core 120 as shown in FIG. 4. The sheets 161 and 161b extend along both of the two long sides (major surfaces). This is similar for the other sets of permanent magnets as well.

FIG. 5 shows a B-B cross section of FIG. 4. Specifically, FIG. 5 shows a cross section of the plate-shaped permanent magnet 130 along the rotation axis of the rotor 100. As shown in FIG. 5, the cylindrical rotor core 120 is formed by stacking the multiple electrical steel sheets 120a; and the end plates 124 and 126 are disposed at two ends of the rotor core 120. In the example shown in FIG. 5, the permanent magnet 130 includes the multiple permanent magnets 130a and 130b inside one permanent magnet housing hole 122. In other words, the permanent magnet 130 is housed in the permanent magnet housing hole 122 by being subdivided into multiple magnets.

As shown in FIG. 5, the sheets 160 and 160b are disposed at both long sides (major surfaces) of the permanent magnet 130 (130a and 130b). Also, the sheet 160a is disposed between the permanent magnets 130a and 130b.

The sheets 160, 160a, and 160b act to fix the permanent magnet 130 (130a and 130b) at a prescribed position inside the permanent magnet housing hole 122. Accordingly, it is desirable for the sheets 160, 160a, and 160b to have the function of closely adhering to the permanent magnets 130 and 131 and the rotor core 120. The sheets 160, 160a, and 160b may be foamable.

The sheets 160, 160a, and 160b according to the embodiment are disposed between the permanent magnets 130a and 130b and the surfaces of the permanent magnets 130 and 131 at both the front and back in the rotation direction of the rotor 100, and so the coolant that is sealed in the coolant flow path 150 can be prevented from leaking out from the outer circumferential surface of the rotor 100 due to the centrifugal force generated by the rotation of the rotor 100. In particular, a reduction of the power efficiency of the rotating electric machine 1 caused by leakage of the coolant can be suppressed by including the sheets 160 and 160b at the long sides (the major surfaces) of the permanent magnet 130 at which the coolant tends to leak.

### (Third embodiment)

A rotating electric machine according to a third embodiment will now be described with reference to FIG. 6. In the rotating electric machine according to the embodiment, the arrangement of the sheet is modified from that of the rotating electric machine of the first embodiment. In the following description, components common with the first embodiment are marked with common reference numerals; and a duplicate description is omitted.

FIG. 6 shows an A-A cross section of FIG. 2. Specifically, FIG. 6 shows a cross section of the plate-shaped permanent magnet 130 along the rotation axis of the rotor 100. As shown in FIG. 6, the cylindrical rotor core 120 is formed by stacking the multiple electrical steel sheets 120a; and the end plates 124 and 126 are disposed at two ends of the rotor core 120. In the example shown in FIG. 6, the permanent magnet 130 includes the multiple permanent magnets 130a and 130b. In other words, the permanent magnet 130 is housed in the permanent magnet housing hole 122 by being subdivided into multiple magnets.

As shown in FIG. 6, the sheet 160 is disposed at one long side (major surface) of the permanent magnet 130 (130a and 130b) in the cross section perpendicular to the rotation axis of the rotor 100. Also, the sheet 160a is disposed between the permanent magnets 130a and 130b. In other words, the sheet is disposed in the gap and at the back of the permanent magnet 130 (130a and 130b) in the rotation direction of the rotor 100.

Furthermore, according to the embodiment, sheets 160c and 160d also are disposed between the end plate 126 and the end portion of the permanent magnet 130a and between the end plate 124 and the end portion of the permanent magnet 130b.

The sheets 160, 160a, 160c, and 160d act to fix the permanent magnet 130 (130a and 130b) at a prescribed position inside the permanent magnet housing hole 122. Accordingly, it is desirable for the sheets 160, 160a, 160c, and 160d to have the function of closely adhering to the permanent magnets 130 and 131 and the rotor core 120.

The sheets 160, 160a, 160c, and 160d according to the embodiment are disposed between the permanent magnets 130 and 131 and the surfaces of the permanent magnets 130 and 131 at the backside in the rotation direction of the rotor 100 and between the permanent magnets 130a and 130b and the end plates 126 and 124, and so the coolant that is sealed in the coolant flow paths 150 and 151 can be prevented from leaking out from the outer circumferential surface of the rotor 100 due to the centrifugal force generated by the rotation of the rotor 100.

According to the embodiment, it is more favorable for the sheets 160c and 160d disposed between the end plate 126 and the end portion of the permanent magnet 130a and between the end plate 124 and the end portion of the permanent magnet 130b to be foamable sheets. By such a configuration, the gap between the end plate and the end surface of the permanent magnet can be effectively filled. All of the sheets 160, 160a, 160c, and 160d may be foamable.

### (Fourth embodiment)

A rotating electric machine according to a fourth embodiment will now be described with reference to FIG. 7. In the rotating electric machine according to the embodiment, the arrangement of the sheet according to the second embodiment is further modified. In the following description, components common with the second embodiment are marked with common reference numerals; and a duplicate description is omitted.

FIG. 7 shows a B-B cross section of FIG. 4. Specifically, FIG. 7 shows a cross section of the plate-shaped permanent magnet 130 along the rotation axis of the rotor 100. As shown in FIG. 7, the cylindrical rotor core 120 is formed by stacking the multiple electrical steel sheets 120a; and the end plates 124 and 126 are disposed at two ends of the rotor core 120. In the example shown in FIG. 7, the permanent magnet 130 includes the multiple permanent magnets 130a and 130b. In other words, the permanent magnet 130 is housed in the permanent magnet housing hole 122 by being subdivided into multiple magnets.

As shown in FIG. 7, the sheets 160 and 160b are disposed at both long sides (major surfaces) of the permanent magnet 130 (130a and 130b). Also, the sheet 160a is disposed between the permanent magnets 130a and 130b.

Also, according to the embodiment, the sheets 160c and 160d are disposed between the end plate 126 and the end portion of the permanent magnet 130a and between the end plate 124 and the end portion of the permanent magnet 130b.

The sheets 160, 160a, 160b, 160c, and 160d act to fix the permanent magnet 130 (130a and 130b) at a prescribed position inside the permanent magnet housing hole 122. Accordingly, it is desirable for the sheets 160, 160a, 160b, 160c, and 160d to have the function of closely adhering to the permanent magnets 130 and 131 and the rotor core 120.

The sheets 160, 160a, 160b, 160c, and 160d according to the embodiment are disposed between the permanent magnets 130a and 130b and the major surface of the permanent magnet 130 at the backside in the rotation direction of the rotor 100 and between the permanent magnets 130a and 130b and the end plates 126 and 124, and so the coolant that is sealed in the coolant flow path 150 can be prevented from leaking out from the outer circumferential surface of the rotor 100 due to the centrifugal force generated by the rotation of the rotor 100.

According to the embodiment as well, it is more favorable for the sheets 160c and 160d disposed between the end plate 126 and the end portion of the permanent magnet 130a and between the end plate 124 and the end portion of the permanent magnet 130b to be foamable sheets. By such a configuration, the gap between the end plate and the end surface of the permanent magnet can be effectively filled. All of the sheets 160, 160a, 160c, and 160d may be foamable.

### (Fifth embodiment)

A rotating electric machine according to a fifth embodiment will now be described with reference to FIG. 8. According to the embodiment, the sheets 160 to 160f are disposed at all surfaces of the permanent magnets 130a and 130b. In such a configuration as well, the coolant that is sealed in the coolant flow paths 150 and 151 can be prevented from leaking out from the outer circumferential surface of the rotor 100 due to the centrifugal force generated by the rotation of the rotor 100. Also, all of the sheets 160 to 160f may be foamable.

While embodiments of the invention are described above, these embodiments have been presented by way of example only, and are not intended to limit the scope of the inventions. Also, features of the embodiments may be combined. Furthermore, embodiments may be implemented in other various forms; and various omissions, substitutions, and changes may be made without departing from the spirit of the inventions. The inventions described in the claims and their equivalents are intended to cover such embodiments and their modifications as would fall within the scope and spirit of the inventions.

### [Reference Numeral List]

1 rotating electric machine
10 stator
11 stator core
100 rotor
110 rotor shaft
120 rotor core
122, 123 permanent magnet housing hole
130, 131 permanent magnet
150, 151 coolant flow path
160, 161 sheet

## Claims

1. A rotor, comprising:
a rotor core extending in an axial direction;
a permanent magnet housing hole formed in the axial direction along an outer circumferential surface of the rotor core in a perpendicular cross section of a rotation axis of the rotor core;
a permanent magnet housed in the permanent magnet housing hole;
a coolant flow path formed along the permanent magnet housing hole inward of the permanent magnet housing hole in the perpendicular cross section in a radial direction of the rotor core, the coolant flow path communicating with the permanent magnet housing hole, the coolant flow path being configured to seal a coolant cooling the permanent magnet; and
a sheet disposed inside the permanent magnet housing hole between an inner wall surface of the permanent magnet housing hole and a surface of the permanent magnet, the sheet closely adhering the permanent magnet to the inner wall surface.

2. The rotor according to claim 1, wherein
the permanent magnet is plate-shaped, and
the sheet is disposed on a major surface of the permanent magnet at a backside in a rotation direction of the rotor.

3. The rotor according to claim 1, wherein
the permanent magnet includes a plurality of permanent magnet parts, and
the sheet also is disposed between the plurality of permanent magnet parts.

4. The rotor according to claim 1, wherein
the permanent magnet is plate-shaped, and
the sheet is disposed on a major surface of the permanent magnet.

5. The rotor according to claim 1, wherein
the rotor core includes:
a plurality of stacked electrical steel sheets; and
end plates disposed at two end surfaces of the plurality of stacked electrical steel sheets, and
the sheet is further disposed between the end plates and the end surfaces of the permanent magnet.

6. The rotor according to claim 1, wherein
the sheet is disposed at all surfaces of the permanent magnet.

7. The rotor according to claim 1, wherein
the sheet is foamable.

8. A rotating electric machine, comprising:
the rotor according to any one of claims 1 to 7; and
a stator disposed to face a circumferential surface of the rotor.
